# EUROPÄISCHE PATENTSCHRIFT

(11) **EP 0 411 175 B1**
(45) Veröffentlichungstag und Bekanntmachung des Hinweises auf die Patenterteilung: **06.10.1993**
(21) Anmeldenummer: 89114155.8
(22) Anmeldetag: 01.08.1989
(51) Int. Cl.: A01M 29/00, B60R 27/00

(54) **Elektronisches Marderabwehrgerät**
Electronic repelling device for martins
Dispositif électronique de protection contre les martres

(43) Veröffentlichungstag der Anmeldung: 06.02.1991
(73) Patentinhaber: Kofler, Christian R., D-91080 Uttenreuth (DE); Höhn, Peter, D-91080 Uttenreuth (DE)
(72) Erfinder:
(74) Vertreter: Tergau, Enno, Dipl.-Ing.

(56) Entgegenhaltungen:
- CH-A- 665 330
- DE-A- 3 613 138
- DE-A- 3 800 839
- DE-A- 3 823 092
- DE-C- 3 639 125

## Beschreibung

Die Erfindung betrifft ein elektronisches Marderabwehrgerät nach dem Oberbegriff des Anspruches 1.

Die bisher vorhandenen Lösungsansätze, wie chemische und akustische Hilfsmittel, haben sich als nicht dauerhaft wirksam erwiesen. Untersuchungen am Institut für Wildbiologie an der Universität Gießen haben dies gezeigt. Eine mögliche Abwehr durch stromführende Gitter an der Wagenunterseite ist nur für Neufahrzeuge sinnvoll und mittlerweile auch im Einsatz (vgl.: DE-A-36 39 125 und DE-A-36 13 138).

Aus der CH-A-665 330 ist ein Marderabschreckungsgerät zum Einbau in Motorfahrzeuge gemäß dem oberbegriff des Anspruches 1 bekannt, welches akustische und/oder optische Signale abgibt. Um zu vermeiden, daß sich die Tiere an die Abschreckungssignale gewöhnen, wird der Rhythmus der Signale laufend automatisch verändert.

Der Erfindung liegt die Aufgabe zugrunde, kostengünstig in einer Vielzahl von Anwendungsbereichen und durch einfache Montage (selbständig oder von jeder Tankstelle einzubauen) sowohl bei Neufahrzeugen als auch zur Nachrüstung von Altfahrzeugen eine wirksame Marderabwehr zu erzielen. Diese Aufgabe wird durch die kennzeichnenden Merkmale des Anspruches 1 gelöst. Vorteilhafte Ausgestaltungen sind in den Unteransprüchen angegeben.

Der Blitzeffekt der lichtstarken Leuchtdioden in Verbindung mit der unregelmäßigen Intervallschaltung für die Ansteuerung hält die lichtempfindlichen Marder von der Annäherung an die o.g. Fahr- und Flugzeuge ab. Durch die hohe Intensität der unregelmäßig wiederkehrenden Lichtblitze verschiedener Farben ist ein Gewöhnungseffekt nahezu ausgeschlossen. Die Farben können durch verschiedenfarbige Lichtquellen oder durch einfarbige Lichtquellen mit entsprechenden Vorschaltfiltern erzeugt werden.

Die Wirksamkeit ist durch empirische und wissenschafliche Untersuchungen nachgewiesen.

Die Energieversorgung der Schaltung kann durch die Fahrzeugbatterie oder durch eine zusätzliche Batterie erfolgen. Wird die Fahrzeugbatterie herangezogen, kann die Schaltung so angeschlossen werden, daß mit dem Ausschalten der Zündung die elektronische Schaltung in Betrieb geht. Durch den geringen Energieverbrauch der elektronischen Schaltung ist es nicht wirtschaftlich, über einen Fotosensor bei Tageslicht das Gerät außer Betrieb zu setzen.

Ein Vorteil der elektronischen Schaltung liegt in dem platzsparenden Aufbau, in der hohen Funktionssicherheit und in dem geringen Energiebedarf. Weiterhin wird das Gerät dadurch sehr preisgünstig für den Verbraucher.

Für die vorliegende Anwendung kommen lichtstarke Leuchtdioden mit breitem Abstrahlwinkel zum Einsatz. Der Vorteil dieser Lichtquellen liegt in der breiten Abstrahlfläche, so daß tote Winkel in denen keine Blendung der Marder möglich ist, nicht vorhanden sind. Damit sind in der Regel keine weiteren Geräte im zu schützenden Bereich notwendig. Die Anordnung der Leuchtdioden kann seriell oder parallel erfolgen, wobei die parallele Anordnung den Blitzeffekt durch eine höhere Lichtstärke verstärkt.

Die Leuchtdioden zeichnen sich durch geringen Energieverbrauch, extrem hohe Lebensdauer und hohe Lichtstärke aus. Zusätzlich sind sie gegen die Umgebungsbedingungen der jeweiligen Einsatzgebiete sehr unempfindlich. Dazu zählen Temperaturschwankungen, Luftfeuchtigkeit, Vibration.

Durch Widerstände kann die Leuchtdauer der Dioden von Dauerlicht bis hin zu Blitzlicht mit unterschiedlichen Hell/dunkel-Zeiten und unregelmäßigem Blinkintervall eingestellt werden. Dadurch tritt bei den Mardern kein Gewöhnungseffekt ein und die abschreckende Wirkung bleibt erhalten.

Besondere Ausführungsarten der Erfindung sind in den abhängigen Ansprüchen angegeben.

Ein Ausführungsbeispiel der Erfindung ist in der Zeichnung dargestellt und wird nachstehend näher erläutert. Es zeigen:
- Fig. 1: Aufbau und Anordnung der elektronischen Schaltung auf der Platine;
- Fig. 2: Vorderansicht und Draufsicht des Gehäuses
- Fig. 3: Schaltplan

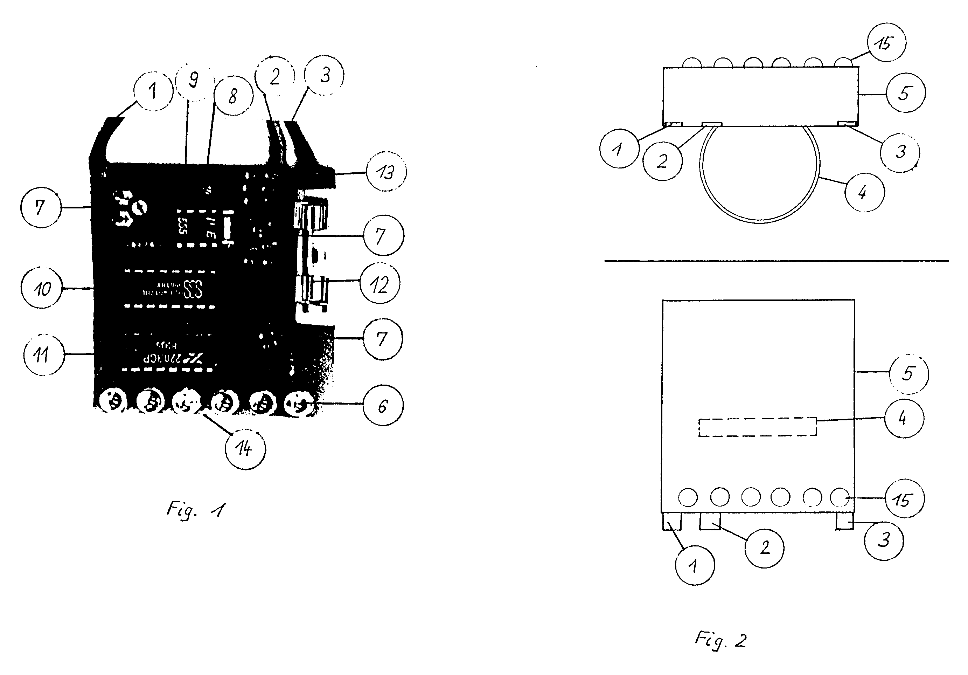

In Fig. 1 ist die Platine 14 mit den Bauteilen dargestellt. Die Stromzuführung von der Autobatterie erfolgt über die Plusklemme 1 und die Masseleitung 3. Falls die Schaltung beim Betrieb des Fahr- oder Flugzeuges nicht funktionsfähig sein soll, so kann dies durch einen Reset-Impuls vom Zündschloß über Klemme 2 erfolgen. Die Platine 14 enthält einen Zeitgeber NE 555 (9), der hier mit zwei Trimmpotentiometern 7 ausgestattet ist für eventuelle Abgleichkorrekturen in der Praxis. Der Zählerbaustein 10 steuert den Treiberbaustein 11 für die Leuchtdioden 6 an. Zur Helligkeitsregulierung ist noch ein weiteres Trimmpotentiometer 7 dazwischen geschaltet. Die Widerstände 13 und die Kondensatoren 8 dienen zur RC-Beschaltung der integrierten Bausteine, des Zeitgebers 9, des Zählerbausteines 10 und des Treiberbausteines 11. Die flinke Sicherung (12) schützt die Schaltung vor Strom- und Spannungsspitzen aus dem Versorgungsnetz.

In der Fig. 2 ist das Gehäuse 5 in Vorderansicht und Draufsicht dargestellt. In dem Ausführungsbeispiel beteht das Gehäuse 5 aus Kunststoff. Die Spannungsversorgung wird durch die Klemmen 1,3 sichergestellt. Klemme 2 dient zur Abschaltung des Gerätes. Für die Befestigung im Motorraum dient die Federschlauchschelle 4. Die Bohrungen 15 im Gehäuse nehmen die Leuchtdioden 6 auf. Diese werden wasserdicht mit dem Gehäuse verbunden.

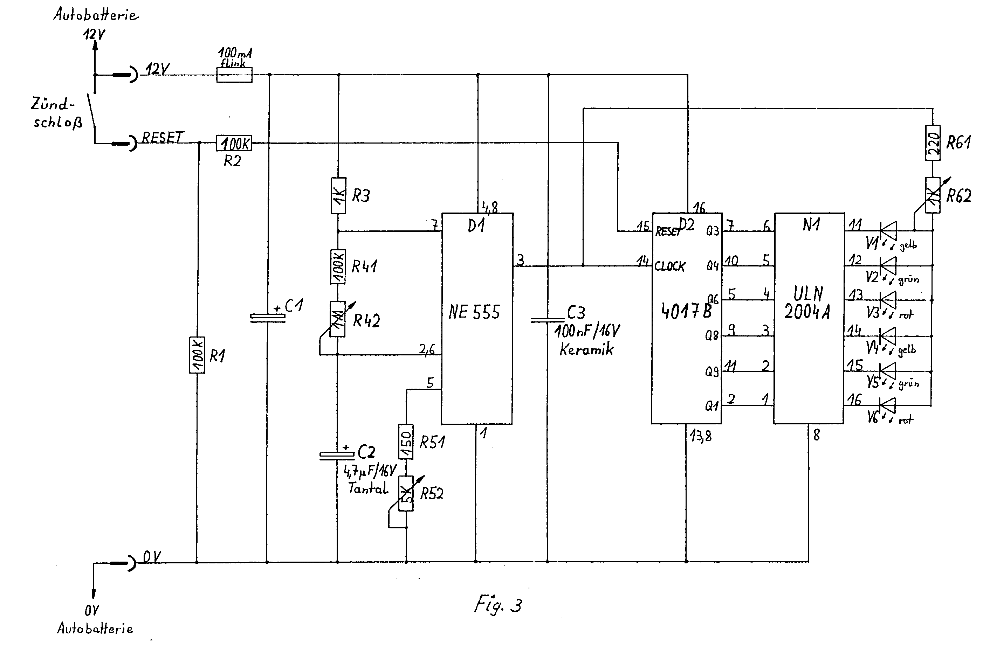

Fig. 3 zeigt den Schaltplan zur elektronischen Schaltung. Die Spannungsversorgung der Schaltung muß zwischen 5 V und 30 V Gleichspannung liegen. Im Ausführungsbeispiel können durch die Trimmpotentiometer (R52,R42) die Hell/dunkel-Zeiten der Leuchtdioden von Blitzlicht bis Dauerlicht variiert werden. Ein weiteres Trimmpotentiometer (R62) steuert die Helligkeit der Leuchtdioden (V1-V6).

Für das Gehäuse 5 kann jedes Material zur Verwendung kommen, jedoch eignet sich in diesem Fall besonders ein wasserdichtes Gehäuse mit einer entsprechend der Umgebung geformten Befestigungslasche. Die Öffnung für den Lichtaustritt kann mit einer lichtdurchlässigen Scheibe abgedeckt werden oder direkt mit dem Gehäusekörper der Leuchtdioden abgeschlossen werden. Beide Möglichkeiten lassen bei einer Verschmutzung die problemlose und schnelle Reinigung bei der routinemäßigen Ölstandskontrolle oder während der Kraftstoffnachfüllung zu. Die Befestigung im Motorraum der Fahrzeuge ist je nach Fahrzeugtyp unterschiedlich. Sinnvoll wäre eine Anbringung in der Nähe der Kühlwasserschläuche, Kfz.-Elektronik, Bremssschläuche oder sonstiger zu schützender Teile.

## Patentansprüche

1. Elektronisches Marderabwehrgerät,
insbesondere für den Einsatz im Karosseriebereich von Personenkraftwagen, Motorrädern, Lastkraftwagen oder Sportflugzeugen,
mit mehreren starken Lichtquellen (6), die von einer elektronischen Schaltung mit Zufalls-Trigger-Teil (9;10;11) zur Erzielung einer unregelmäßigen Lichtfolge angesteuert werden,
und die in einem Gehäuse (5) mit mindestens einer Lichtaustrittsöffnung untergebracht ist,
dadurch gekennzeichnet,
daß die als Lichtquellen eingesetzten, Licht unterschiedlicher Farbe abstrahlenden Leuchtdioden (6) blitzlichtartig betrieben werden und eine Lichtstärke von wenigstens drei Candela haben.

2. Elektronisches Marderabwehrgerät nach Anspruch 1,
gekennzeichnet durch
eine elektronische Schaltung (Platine 14) unter anderem bestehend aus einem Zeitgeber (9), einem Zählerbaustein (10) und einem Verstärker (Treiberbaustein 11) zur zufälligen Ansteuerung der Leuchtdioden (6).

3. Elektronisches Marderabwehrgerät nach wenigstens einem der vorhergehenden Ansprüche,
dadurch gekennzeichnet,
daß die als Lichtquellen eingesetzten Leuchtdioden (6) einen breiten Abstrahlwinkel haben.

## Claims

1. Electronic marten-repellant device, in particular for use in the area of the body of passenger vehicles, motorcycles, lorries or sports aeroplanes, having a plurality of strong light sources (6) which are driven by an electronic circuit with a random trigger component (9;10;11) in order to achieve an irregular sequence of light, and which is accommodated in a housing (5) with at least one light exit opening, characterised in that the LEDs (6) which are used as light sources and which radiate light of a different colour are operated in a flash-light manner and have a light intensity of at least three candela.

2. Electronic marten-repellant device according to Claim 1, characterised by an electronic circuit (circuit board 14) consisting inter alia of a timer (9), a counter component (10) and an amplifier (driver component 11) for randomly driving the LEDs (6).

3. Electronic marten-repellant device according to at least one of the preceding claims, characterised in that the LEDs (6) used as light sources have a wide angle of radiation.

## Revendications

1. Appareil électronique de défense contre les martres, notamment pour utilisation dans la région de la carrosserie de véhicules de tourisme, motocyclettes, véhicules utilitaires ou avions de tourisme,
avec plusieurs fortes sources de lumière (6) qui sont commandées par un circuit électronique avec partie gâchette aléatoire (9; 10; 11) pour obtenir une séquence lumineuse irrégulière,
et qui est agencé dans un boîtier avec au moins une ouverture de sortie de lumière,
caractérisé
par le fait que les diodes luminescentes (6) utilisées en tant que sources de lumière, rayonnant de la lumière de couleurs différentes, sont utilisées en mode "éclairs de lumière" et ont une intensité lumineuse d'au moins 3 candelas.

2. Appareil électronique de défense contre les martres selon revendication 1,
caractérisé par un circuit électronique (platine 14) constitué entre autres, par une base de temps (9), par un module compteur (10) et par un amplificateur (module d'attaque 11) pour la commande aléatoire des diodes luminescentes (6).

3. Appareil électronique de défense contre les martres selon au moins l'une des revendications précédentes,
caractérisé
par le fait que les diodes luminescentes (6) utilisées comme sources de lumière ont un large angle de rayonnement.
